# EUROPEAN PATENT SPECIFICATION

(11) **EP 3 708 981 B1**
(45) Date of publication and mention of the grant of the patent: **03.11.2021**
(21) Application number: 20162041.6
(22) Date of filing: 10.03.2020
(51) Int. Cl.: G01K 1/14, G01K 5/06, G01K 5/22, G01K 13/00, G01K 1/08

(54) **DEVICE FOR RETAINING A THERMOMETER FOR CLINICAL USE DURING SHAKING**
VORRICHTUNG ZUM HALTEN EINES THERMOMETERS FÜR DEN KLINISCHEN GEBRAUCH WÄHREND DES SCHÜTTELNS
DISPOSITIF DE MAINTIEN D'UN THERMOMÈTRE À USAGE CLINIQUE PENDANT L'AGITATION

(30) Priority: 12.03.2019 IT 201900000815 U
(43) Date of publication of application: 16.09.2020
(73) Proprietor: Pikdare-Società per Azioni, 22070 Casnate con Bernate CO (IT)
(72) Inventor: RUIZ BRAVO, Alejandro José, 22100 Como (IT); SPOLETINI, Silvia, 22070 Casnate con Bernate (IT)
(74) Representative: Perani & Partners S.p.A.

(56) References cited:
- Anonymous: "VedoEcoplus", , 7 June 2017 (2017-06-07), XP055717234, Retrieved from the Internet: URL:https://web.archive.org/web/2017060720 5813/http://www.picsolution.com/en/product s/for-fever-measurement/environmentally-fr iendly-thermometers/vedoecoplus.html [retrieved on 2020-07-22]

## Description

The present invention relates to a device for retaining a clinical thermometer while it is being shaken down to cause the expansion material to return into the bulb of the tube.

Body temperature is known to be measured using a graduated thermometer by the expansion of a particular material, e.g. a composition containing gallium, within a capillary tube which extends from a base bulb of the same tube. The body temperature degree is indicated by the value attained by the expanded material on a graduated scale on the longitudinal body of the thermometer.

Also, using thermometers of the aforementioned type, each new measurement requires the expandable material to return into the bulb of the tube.

For this purpose, conventionally, the thermometer is held at the end opposite to the bulb of the tube with the fingers of one hand and is quickly shaken.

In order to prevent the thermometer from falling off the hand during shaking and be possibly broken, devices are known to be used against which the thermometer may be secured during shaking, such that this movement may be performed by holding the device instead of directly holding the thermometer.

Such devices are known in the art as shakers. In addition, shakers can increase the momentum applied to the bulb of the thermometer, thus reducing the number of shaking cycles required for the expandable material to return into the bulb of the tube.

They basically consist of a longitudinal housing, in which the body of the thermometer is placed, means for firmly retaining the thermometer, in both longitudinal and transverse directions, as well as an appendage flexibly connected to the end of the housing that is opposite to the end in which the bulb of the tube of the thermometer is located, when the latter is placed in the housing.

Prior art examples of such shaking devices are disclosed in DE 202011105857 U1, GB 627656 and also JP 53148674U. Another such device is the "VedoEcoplus", see https://web.archive.org/web/20170607205813/http://www.picsolution.com/en/products/for-fever-measurement/environmentally-friendly-thermometers/vedoecoplus.html.

While these known devices are suitable for the purpose, they still have the drawback of not allowing to control the bending point, which will quickly rupture the flexible connection of the appendix at the end of the housing.

Therefore, the object of the present invention is to obviate the drawbacks of prior art devices, by providing a device in which the bending of the appendage may be confined to an area defined by the designer, to ensure extended life.

A further object of the present invention is to provide a device that can withstand movements that cause twisting.

This and other objects, as more clearly explained hereinafter, are fulfilled by a device for shaking a clinical thermometer, of the type having a longitudinal body with a graduated scale thereon, a bulb located at the end of the body, a measuring tube which extends along the body of the thermometer, said bulb and said tube containing a material that expands under heat along the tube, said shaking device comprising a longitudinal housing, in which the body of the thermometer is placed, means for firmly retaining the body of the thermometer, in both longitudinal and transversal directions, within said housing, and an appendage that is flexibly connected to the end of the housing, opposite to the end in which the bulb of the tube of the thermometer is located, when the latter is placed in the housing, characterized in that said appendage has a longitudinal slot which defines, by its longitudinal sides, a pair of braces connecting the appendage to the housing.

The invention will be now described in greater detail with reference to one embodiment thereof, given by way of exemplary illustration and without limitation, and shown in the annexed drawings, in which:
Figure 1 shows a perspective view of the shaking device with a clinical thermometer as the latter is being introduced into the housing of the device;
Figure 2 shows a top view of the shaking device of Figure 1 with the thermometer within the housing;
Figure 3 shows a longitudinal sectional view of the shaking device of the invention;

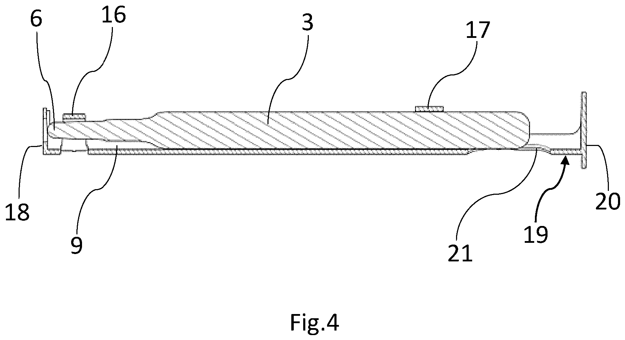

Figure 4 shows a longitudinal sectional view of the device of Figure 3, with a thermometer within the housing.

Referring to the aforementioned figures, the shaking device for a thermometer according to the present invention is generally designated by numeral 1, whereas the clinical thermometer to be shaken by the device is generally designated by numeral 2.

In the embodiment of the figures, the latter is of the type that comprises a body 3 with a conventional graduated scale, generally referenced 4, associated therewith, and a capillary tube, generally referenced 5, which extends longitudinally on the body 3 from a bulb 6, projecting out of the end 7, that can form a shoulder 8 for the body 3.

Therefore, the clinical thermometer 2 is of the type that measures body temperature via the expansion of a material contained in the bulb 6 into the conventional tube 5 that extends therefrom. The expandable material in the bulb 6 and the tube 5 is, for instance, a composition containing gallium, which is known to accomplish the specific tasks of a clinical thermometer.

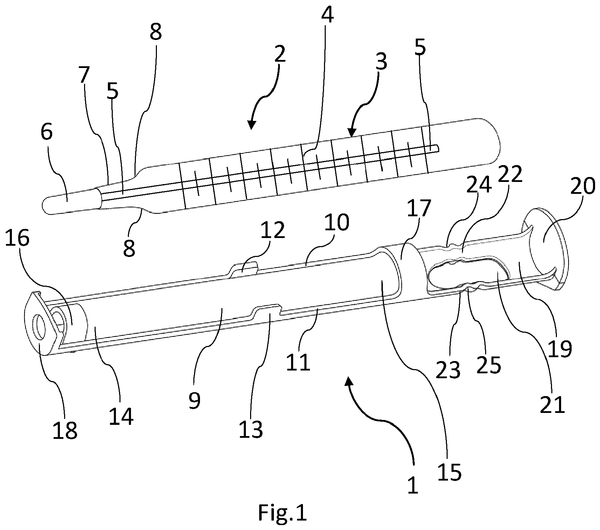

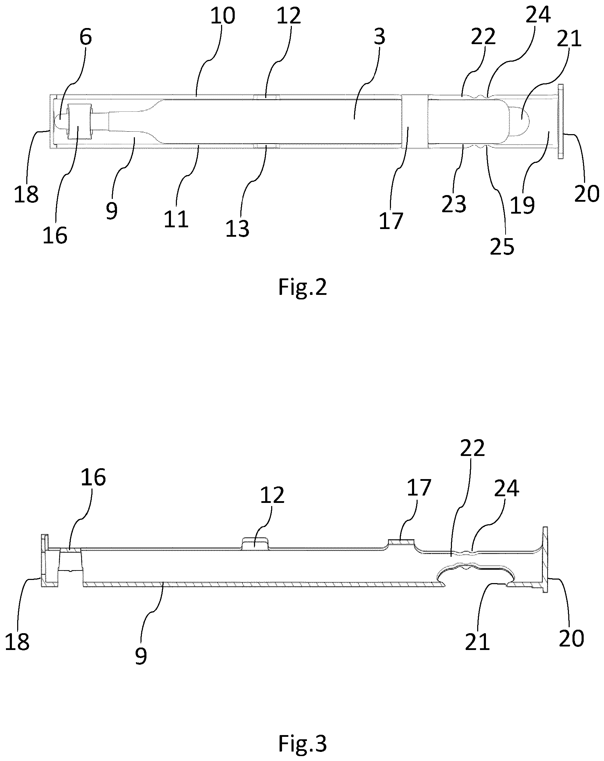

Referring to the perspective view of Figure 1 and to the sectional view of Figure 3, the device 1 comprises a portion 9 that forms the housing for the body 3 of the thermometer 2, when the latter must be shaken down, as discussed hereinbelow. The housing 9 has a concave shape delimited by the sides 10 and 11, which have tabs 12 and 13 for safer retention of the body 3.

The housing 9, which extends in a longitudinal direction, also has respective bands 16 and 17, proximate to the ends 14 and 15, which are designed to encircle the respective end portions of the body 3 of the thermometer 2 once the latter is placed in the housing 9.

The end 14 of the housing 9 has a transverse wall 18 against which the bulb 6 abuts when the thermometer is disposed in the housing 9, to thereby retain the body 3 of the thermometer in the axial direction.

The wall 18 may be closed, with a cavity containing the bulb, or open.

An appendage 19 terminating with a transverse wall 20 is connected to the end 15 of the housing 9. The appendage 19 also has a concave transverse shape, corresponding to that of the housing 9 and forming an extension thereof.

An elongate opening 21 is formed in the appendage 19, and its sides form a pair of braces 22 and 23 that provide axial connection with the housing 9.

Each brace 22 and 23 has transverse depressions 24, 25 that impart flexibility to the braces as the device and the thermometer therein are shaken, and confine the bending, as well as the resulting mechanical stresses, to an area defined by the designer.

According to a preferred embodiment, the transverse depressions 24, 25 define a curvilinear, e.g. S-shaped, profile of the braces 22,23. Such curvilinear profile imparts greater flexibility to the braces 22, 23 as the device 1 and the thermometer therein are shaken.

In order to perform the shaking movement, the device is held at the appendage 19 using the wall 20 for safely retaining it between the fingers of the hand.

The shaking movement is facilitated and confined by the presence of the depressions 24 and 25 on the braces 22 and 23, without excessively affecting the life of the device.

In a preferred embodiment, the device 1 is made of a plastic, preferably thermoplastic, material. Even more preferably, the thermoplastic material is polypropylene copolymer, preferably mixed with 10% to 30% polypropylene-based elastomer.

## Claims

1. A device (1) for shaking a clinical thermometer (2), of the type having a longitudinal body (3) with a graduated scale (4) thereon, a bulb (6) located at the end (7) of the body (3), a measuring tube (5) which extends along the body (3), said bulb (6) and said tube (5) containing a material that expands under heat along the tube, said device (1) comprising a longitudinal housing (9) in which the body (3) of the thermometer (2) can be placed, means (16, 17, 18) for firmly retaining the body (3) of the thermometer, in both longitudinal and transversal directions, within said housing (9), and an appendage (19) that is flexibly connected to the end (15) of the housing (9), opposite to the end (14) in which the bulb (6) is located when it is placed in the housing (9), **characterized in that** said appendage (19) has a longitudinal slot (21) which defines, by its longitudinal sides, a pair of braces (22, 23) connecting the appendage (19) to the housing (9).

2. A device as claimed in claim 1, **characterized in that** said braces (22, 23), defined by the sides of said slot (21) formed in said appendage (19) have at least one respective transverse depression (24, 25), which is intended to enhance its flexibility.

3. A device as claimed in claim 2, **characterized in that** the transverse depressions (24,25) define a curvilinear profile of the braces (22,23).

## Patentansprüche

1. Vorrichtung (1) zum Schütteln eines klinischen Thermometers (2) des Typs, der einen länglichen Körper (3) mit einer Messskala (4) darauf, einem Kolben (6), der sich am Ende (7) des Körpers (3) befindet, einem Messrohr (5), das sich entlang des Körpers (3) erstreckt, wobei der Kolben (6) und das Rohr (5) ein Material enthalten, das sich unter Wärme entlang des Rohres ausdehnt, wobei die Vorrichtung (1) ein längliches Gehäuse (9) umfasst, in das der Körper (3) des Thermometers (2) platziert werden kann, Mittel (16, 17, 18) zum festen Halten des Körpers (3) des Thermometers sowohl in Längs- als auch in Querrichtung im Gehäuse (9) sowie einen Ansatz (19), der flexibel mit dem Ende (15) des Gehäuses (9) verbunden ist, gegenüber dem Ende (14), in dem sich der Kolben (6) befindet, wenn er sich im Gehäuse (9) befindet, aufweist, **dadurch gekennzeichnet, dass** der Ansatz (19) einen Längsschlitz (21) aufweist, der durch seine Längsseiten ein Paar Abstützungen (22, 23) definiert, die den Ansatz (19) mit dem Gehäuse (9) verbinden.

2. Vorrichtung nach Anspruch 1, **dadurch gekennzeichnet, dass** die Abstützungen (22, 23), die durch die Seiten des Schlitzes (21), der im Ansatz (19) gebildet ist, definiert werden, mindestens eine jeweilige Quervertiefung (24, 25) aufweisen, die die Flexibilität erhöhen sollen.

3. Vorrichtung nach Anspruch 2, **dadurch gekennzeichnet, dass** die Quervertiefungen (24, 25) ein kurvenförmiges Profil der Abstützungen (22, 23) definieren.

## Revendications

1. Dispositif (1) pour secouer un thermomètre clinique (2), du type ayant un corps longitudinal (3) avec une échelle graduée (4) sur celui-ci, un bulbe (6) situé à l'extrémité (7) du corps (3), un tube de mesure (5) qui s'étend le long du corps (3), ledit bulbe (6) et ledit tube (5) contenant un matériau qui se dilate sous l'effet de la chaleur le long du tube, ledit dispositif (1) comprenant un logement longitudinal (9) dans lequel le corps (3) du thermomètre (2) peut être placé, des moyens (16, 17, 18) pour retenir fermement le corps (3) du thermomètre, dans les directions longitudinale et transversale, à l'intérieur dudit logement (9), et un appendice (19) qui est relié de manière flexible à l'extrémité (15) du logement (9), opposé à l'extrémité (14) dans laquelle le bulbe (6) est situé lorsqu'il est placé dans le logement (9), **caractérisé en ce que** ledit appendice (19) a une fente longitudinale (21) qui définit, par ses côtés longitudinaux, une paire d'entretoises (22, 23) reliant l'appendice (19) au logement (9).

2. Dispositif selon la revendication 1, **caractérisé en ce que** lesdites entretoises (22, 23), définies par les côtés de ladite fente (21) formée dans ledit appendice (19), ont au moins une dépression transverse respective (24, 25), qui est destinée à améliorer sa flexibilité.

3. Dispositif selon la revendication 2, **caractérisé en ce que** les dépressions transverses (24, 25) définissent un profil curviligne des entretoises (22, 23).
